# FASCICULE DE BREVET EUROPEEN

(11) **EP 0 653 156 B1**
(45) Date de publication et mention de la délivrance du brevet: **05.02.1997**
(21) Numéro de dépôt: 93402760.8
(22) Date de dépôt: 12.11.1993
(51) Int. Cl.: A01K 85/16

(54) **Leurre perfectionné souple pour la pêche en dandine, au relâché et au manié**
Verbesserte flexibeler Köder zum Angeln mittels Schlenkern, freischwimmend oder geführt
Improved flexible fishing lure for jiggling, free or guided

(43) Date de publication de la demande: 17.05.1995
(73) Titulaire: RAGOT Société Anonyme, F-22600 Loudeac (FR)
(72) Inventeur: Guillois, Hubert, F-22600 La Motte (FR); Benard, Claude, F-29111 Scaer (FR)
(74) Mandataire: Hammond, William

(56) Documents cités:
- CA-A- 1 172 449
- US-A- 2 338 577
- US-A- 2 583 616
- US-A- 3 735 518
- US-A- 3 899 847
- US-A- 3 983 656
- US-A- 4 317 305
- US-A- 4 796 375
- US-A- 5 182 875

## Description

La présente invention est relative à un leurre perfectionné souple pour la pêche notamment au lancer, en dandine, au relâché et au manié.

L'homme du métier connaît en particulier le leurre décrit dans le document US-A-3.490.165 qui se présente sous la forme d'un poisson en un matériau plastique et dont le corps serait découpé en tranches épaisses perpendiculaires au plan médian du poisson.

Un tel leurre présente une certaine souplesse, mais n'est néanmoins pas satisfaisant dans la mesure où il se comporte, dans une action de pêche, avec une certaine lourdeur.

Il connaît aussi un leurre souple ayant la forme générale d'un poisson, comprenant une tête et une queue reliées par une lame souple médiane qui comporte des lamelles disposées symétriquement de part et d'autre d'elle et faisant chacune un angle aigu ouvert en direction de la tête, l'enveloppe des bords libres des lamelles étant l'image de la peau du poisson (voir par exemple US-A-3983656).

Si ce leurre permet d'obvier à certains inconvénients du leurre décrit dans le document US-A-3.490.165, il présente encore quelques inconvénients, comme par exemple un manque d'amplitude dans ses mouvements.

Aussi un des buts de la présente invention est-il de fournir un leurre perfectionné souple notamment pour la pêche, au lancer, en dandine, au relâché et au manié, qui présente une amplitude satisfaisante dans ses mouvements, provoquant ainsi une émission d'ondes importante dans l'eau et une liberté considérable dans la déformation du leurre lorsque l'on relache la traction.

Un autre but de la présente invention est de fournir un tel leurre perfectionné qui soit réalisable de façon aisée et à moindre frais.

Ces buts, ainsi que d'autres qui apparaîtront par la suite, sont atteints par une leurre perfectionné souple pour la pêche, au lancer, en dandine, au relâché et au manié ayant la forme générale d'un poisson, comprenant une tête et une queue reliées par une lame souple médiane, qui comporte des lamelles disposées symétriquement de part et d'autre d'elle et faisant chacune un angle aigu ouvert en direction de la tête, l'enveloppe des bords libres des lamelles étant l'image de la peau d'un poisson, lequel leurre est caractérisé, selon la présente invention, par le fait que chaque lamelle comporte sensiblement vers le milieu de son pourtour une encoche.

Avantageusement, toutes les encoches sont disposées sur une ligne figurant la ligne latérale d'un poisson.

De préférence, la queue du leurre est constituée par un ensemble de lamelles réunies les unes aux autres de façon à constituer un bloc formant balourd.

Avantageusement, les lamelles ont la même épaisseur et l'espace entre deux lamelles successives est compris entre 1 et 2 fois l'épaisseur de celles-ci.

De préférence, l'arrière de la tête est biseauté en direction de la queue, de telle sorte que l'écoulement de l'eau en direction des lamelles est amélioré, favorisant ainsi la pression sur la lamelle immédiatement située après la tête, ce qui engendre un déclenchement ondulatoire tout comme un corps de poisson.

Avantageusement, ce leurre comporte un canal central allant de la tête à la queue selon l'axe de symétrie longitudinale.

La description qui va suivre et qui ne présente aucun caractère limitatif, doit être lue en regard des figures annexées parmi lesquelles :
- la figure 1 est une vue de dessus d'un leurre selon la présente invention ;
- la figure 2 est une vue latérale de ce leurre ; et,
- la figure 3 est une coupe verticale selon la ligne III-III de la figure 2.

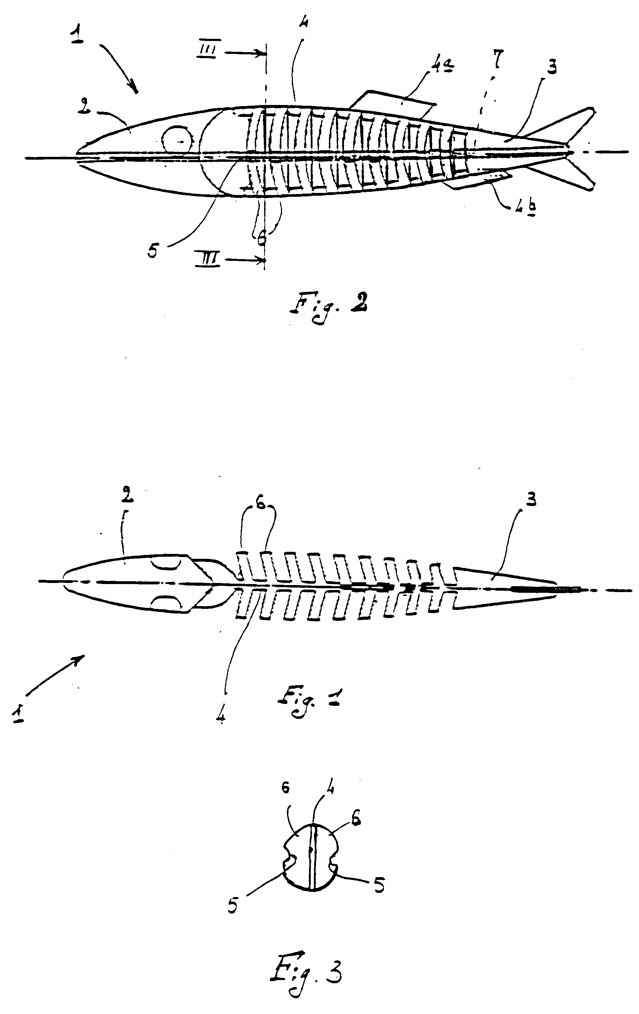

Ainsi qu'on peut le voir sur la figure 1 un leurre, désigné dans son ensemble par la référence 1, présente, selon la présente invention, la forme générale d'un poisson. Il comporte une tête 2 et une queue 3 reliées entre elles par une lame médiane souple 4 qui est dans le plan de symétrie verticale du poisson. La section peut être, de préférence, circulaire ou elliptique.

La lame médiane souple 4 comporte des lamelles 6 qui sont disposées symétriquement de part et d'autre d'elle et dont l'enveloppe des bords libres constitue l'image du corps d'un poisson. L'écoulement de l'eau étant perturbé par les creux entre les lamelles, un mouvement ondulatoire est créé comme le vent fait onduler un oriflamme.

Cette lame médiane souple 4 peut aussi comporter des excroissances lamellaires constituant les nageoires dorsale 4a et anale 4b.

Chaque lamelle 6 forme avec la lame médiane 4 un angle aigu ouvert vers la tête 2 du leurre 1 : deux lames symétriques forment donc un V dont l'angle est obtus. Cet angle est généralement compris entre 180 et 140 degrés.

Cette disposition des lamelles 6 a pour effet d'accroître la résistance à l'eau du leurre 1 et de générer une ondulation plus importante, donnant un caractère plus pêchant à celui-ci : il est particulièrement destiné à la pêche en dandine, au relâché au manié, au lancer et à la traîne. Ces lamelles 6 sont, selon le présent exemple de réalisation, toutes de même épaisseur. L'espace entre deux lamelles successives est compris entre 1 et 2,6 fois l'épaisseur d'une lamelle, et même entre 1 et 2 fois cette épaisseur : cet espace étant au moins égal à une fois cette épaisseur.

Selon la présente invention, chaque lamelle 6 comporte sensiblement au milieu de son pourtour une encoche 5. L'ensemble de ces encoches 5 constitue une ligne matérialisant la ligne latérale du poisson. Ces encoches 5 ont notamment pour fonction d'augmenter la pénétration des filets d'eau et par suite de renforcer l'ondulation du leurre et les tourbillons qui se créent entre chaque lamelle.

Selon une variante de réalisation, la queue 3 du poisson figuré par le leurre est un bloc formant balourd, équivalent à un ensemble de lamelles réunies les unes aux autres. Ce balourd constituant la queue 3 du leurre procure à ce dernier des mouvements plus amples dans l'eau, ce qui entraîne une émission d'ondes plus importantes dans l'eau : ceci permet d'alerter des poissons situés relativement loin de ce leurre 1 par rapport aux leurres connus.

Usuellement, le leurre 1 est fixé à la ligne de pêche par sa tête 2, l'hameçon pouvant comporter un lest qui est de préférence situé dans la moitié du leurre comportant la tête.

Mais, le leurre 1 peut aussi comporter un canal longitudinal 7 qui va de la tête 2 à la queue 3 et qui est disposé selon l'axe de symétrie longitudinale du leurre 1. Ce canal 7 permet de fixer le leurre 1, par exemple, sur la hampe d'un hameçon triple.

## Revendications

1. Leurre perfectionné souple pour la pêche notamment au lancer, en dandine, au relâché et au manié, ayant la forme générale d'un poisson, comprenant une tête (2) et une queue (3) reliées par une lame médiane souple (4), qui comporte des lamelles (6) disposés symétriquement de part et d'autre d'elle et faisant chacune un angle aigu ouvert en direction de ladite tête (2), l'enveloppe des bords libres desdites lamelles (6) étant l'image de la peau du poisson, caractérisé par le fait que chaque lamelle (6) comporte sensiblement vers le milieu de son pourtour une encoche (5).

2. Leurre perfectionné selon la revendication 1, caractérisé par le fait que toutes les encoches (5) sont disposées sur une ligne figurant la ligne latérale d'un poisson.

3. Leurre perfectionné selon la revendication 1, caractérisé par le fait que la queue (3) du leurre est constituée par un ensemble de lamelles (6) réunies les unes aux autres de façon à constituer un bloc formant balourd.

4. Leurre perfectionné selon la revendication 1, caractérisé par le fait que les lamelles (6) sont toutes de même épaisseur.

5. Leurre perfectionné selon la revendication 4, caractérisé par le fait que l'espace entre deux lamelles (6) successives est compris entre 1 et 2 fois l'épaisseur d'une lamelle.

6. Leurre perfectionné selon l'une quelconque des revendications 1 à 5, caractérisé par le fait qu'il comporte un canal longitudinal (7) allant de la tête (2) à la queue (3) selon l'axe de symétrie longitudinale dudit leurre (1).

## Claims

1. An improved flexible bait for fishing, especially for casting, dapping, releasing and handling, having the general shape of a fish, comprising a head (2) and a tail (3) connected by a flexible central strip (4) comprising fins (6) disposed symmetrically on either side of it and each forming an acute angle open towards the head (2), the outline of the free edges of the scales (6) being in the shape of the fish's skin, characterised in that each scale (6) is formed with a notch (5) substantially in the region of the middle of its periphery.

2. An improved bait according to claim 1, characterised in that all the notches (5) are disposed along a line representing the lateral line of a fish.

3. An improved bait according to claim 1, characterized in that the tail (3) of the bait comprises a set of scales (6) joined to one another so as to constitute a block forming an unbalance.

4. An improved bait according to claim 1, characterised in that the scales (6) all have the same thickness.

5. An improved bait according to claim 4, characterized in that the space between each pair of successive scales (6) is between once and twice the thickness of a scale.

6. An improved bait according to any one of claims 1 to 5, characterized in that it comprises a longitudinal duct (7) extending from the head (2) to the tail (3) along the longitudinal axis of symmetry of the bait (1).

## Patentansprüche

1. Verbesserter flexibler Köder zum Angeln mittels Schlenkern, freischwimmend oder geführt, der im wesentlichen die Form eines Fisches mit einem Kopf (2) und einem Schwanz (3) aufweist, die verbunden sind mittels eines flexiblen Mittelbandes (4), das auf beiden Seiten symmetrisch angeordnete Lamellen (6) aufweist, die jede in einem spitzen Winkel in Richtung des Kopfes (2) befestigt sind, wobei die umhüllende der freien Ränder der Lamellen wie die Haut eines Fisches aussieht, **dadurch gekennzeichnet,** daß jede Lamelle (6) im wesentlichen in der Mitte des äußeren Umfangs eine Kerbe (5) aufweist.

2. Verbesserter flexibler Köder gemäß Anspruch 1, **dadurch gekennzeichnet,** daß alle Kerben (5) auf einer Linie angeordnet sind, die die seitliche Linie eines Fisches bildet.

3. Verbesserter flexibler Köder gemäß Anspruch 1, **dadurch gekennzeichnet,** daß der Schwanz (3) des Köders gebildet wird aus einer Anordnung von Lamellen (6), die derartig miteinander verbunden sind, daß ein eine Unwucht erzeugendes Segment gebildet wird.

4. Verbesserter flexibler Köder gemäß Anspruch 1, **dadurch gekennzeichnet,** daß die Lamellen (6) alle dieselbe Dicke aufweisen.

5. Verbesserter flexibler Köder gemäß Anspruch 4, **dadurch gekennzeichnet,** daß der Zwischenraum zwischen zwei nebeneinanderliegenden Lamellen (6) etwa ein- bis zweimal so groß wie die Dicke einer Lamelle ist.

6. Verbesserter flexibler Köder gemäß einer der Ansprüche 1 bis 5, **dadurch gekennzeichnet,** daß dieser einen zentralen Kanal (7) aufweist, der von dem Kopf (2) bis zum Schwanz (3) entlang der länglichen Symmetrieachse des Köders (1) verläuft.
